(19) Europäisches Patentamt
European Patent Office
Office européen des brevets

(11) Publication number: 0 348 225 A2

# (12) EUROPEAN PATENT APPLICATION

(21) Application number: 89306395.8

(22) Date of filing: 23.06.89

(51) Int. Cl.[4]: C 08 L 63/00
C 08 K 3/00

(30) Priority: 24.06.88 JP 156190/88
07.12.88 JP 309110/88

(43) Date of publication of application:
27.12.89 Bulletin 89/52

(84) Designated Contracting States: DE GB

(71) Applicant: Hitachi Chemical Co., Ltd.
1-1, Nishi-shinjuku 2-chome Shinjuku-ku
Tokyo 160 (JP)

(72) Inventor: Abe, Yoshitaka
1305-124, Tamado
Shimodate-shi (JP)

Yokoyama, Ryoji Kichijoji Painkuresuto D-603
27-1, Kichijoji Minamicho-1-chome
Musashino-shi (JP)

Masuoka, Osamu
840-26, Suzumenomiya-2-chome
Utsunomiya-shi (JP)

Hakuta, Hiroshi
Kawashima Hausu, 239, Ozakata
Shimodate-shi (JP)

Hosono, Satoru
Higashishinden Hausu 244, Ozakata
Shimodate-shi (JP)

Wada, Masaru
Shisuiryo, 240, Ozakata
Shimodate-shi (JP)

Ishibashi, Takehiko
770-4, Oyama
Oyama-shi (JP)

Yokono, Haruki
6021-2, Miharucho-1-chome
Yuki-shi (JP)

(74) Representative: Cresswell, Thomas Anthony et al
J.A. Kemp & Co. 14 South Square Gray's Inn
London WC1R 5EU (GB)

## (54) Epoxy resin molded article with marbled pattern.

(57) An epoxy resin molded article having a marbled pattern obtainable by casting a mixture comprising

(I) an epoxy resin composition comprising

(a) an epoxy resin

(b) an acid anhydride as a curing agent, and

(c) a curing accelerator, and

(II) a filler, said epoxy resin composition having a refractive index of from 1.53 to 1.61 when cured, and said filler having a refractive index within 0.05 of the refractive index of said cured epoxy resin composition.

EP 0 348 225 A2

## Description

# EPOXY RESIN MOLDED ARTICLE WITH MARBLED PATTERN

BACKGROUND OF THE INVENTION

This invention relates to an epoxy resin molded article with marbled pattern usable as materials of domestic machines and instruments, construction material, etc., as well as to a process for producing said epoxy resin molded article with marbled pattern.

As resin molded article with marbled pattern, i.e. the so-called artificial marble, molded articles prepared by kneading assistants such as curing agent and the like and a filler such as glass powder, aluminum hydroxide and the like into an unsaturated polyester resin, casting the resulting composition in a mold and curing it at ordinary temperature or a temperature of 60-80°C are known. Although this polyester type artificial marble is semi-transparent and relatively rich in designability, it cannot give a glossy, deep appearance unless a transparent resin layer such as gel coat is previously formed in the mold at the time of forming. Further, its cured product is low in strength, and it cannot acquire a strength endurable to demolding and cannot have a sufficient strength as a completed article, unless a reinforcing layer of glass mat is formed on its front or back side. Further, if it is cured at ordinary temperature, the curing reaction takes a long period of time, and the productivity is low.

On the other hand, artificial marbles using acrylic resin have also been proposed (for example, Japanese Patent Publication No. 50-22,586, Japanese Patent Application Kokai (Laid-Open) No. 51-5,383). However, acrylic artificial marbles are disadvantageous in that the methyl methacrylate monomer or methyl methacrylate syrup used therein shows a great contraction at the time of polymerization reaction. In order to suppress this contraction, the polymerization reaction must be made to progress under mild conditions. That is, it is necessary to carry out a preliminary polymerization in the mold at a relatively low temperature of 50-60°C for several hours and then carry out polymerization at 120-130°C for 2-3 hours to enhance the conversion, and such a process is low in productivity. Further, acrylic artificial marble lacks transparency, so that it cannot exhibit the superior feeling of natural marble and is inferior in designability.

With the aim of exhibiting the superior feeling of natural marble, an inorganic-organic composite material having a semi-transparent feeling has been proposed in Japanese Patent Application Kokai (Laid-Open) No. 62-132,751. It is characterized in that:

(1) the inorganic powder has a particle size of 1-300 μm,

(2) absolute value of the difference between reflective indices of the inorganic powder and the organic polymer is in the range of 0.02 to 0.06,

(3) it is composed of 18-85% by weight of an inorganic powder of which total light transmittance in the direction of thickness is 5-45% and 90-15% by weight of an organic polymer.

However, since the above-mentioned polyester or acrylic resin or polystyrene, styrene-methyl methacrylate copolymer or the like is mainly used as said organic polymer, this technique cannot overcome the above-mentioned disadvantages such as lowness in strength, high contraction at the time of polymerization and low productivity.

On the other hand, it is also known that an artificial marble having granular pattern on its surface can be obtained by cast-molding a liquid synthetic resin compounded with a granular cured resin containing broken stone or inorganic filler.

However, this type of artificial marble is disadvantageous in that the interfacial adhesive force between the resin and broken stone or inorganic filler is weak and hence it is poor in hot water resistance and hence, if it is subjected to a boiling test, whitening takes places at the interface between broken stone or granular compound and the matrix.

SUMMARY OF THE INVENTION

An object of this invention is to overcome the above-mentioned disadvantages and to provide an epoxy resin molded article with marbled pattern, e.g. an artificial marble using a transparent or semi-transparent epoxy resin which is excellent in transparency, moldability, low-contractability and smoothness, as well as a process for producing said artificial marble.

It is another object of this invention to provide an artificial marble excellent in hot water resistance, as well as a process for producing said artificial marble.

Thus, this invention provides an epoxy resin molded article with marbled pattern obtained by cast-molding a mixture comprising.

(I) an epoxy resin composition comprising

(a) an epoxy resin

(b) an acid anhydride as a curing agent, and

(c) a curing accelerator, and

(II) a filler, said epoxy resin composition having, after cured, a refractive index of 1.53 to 1.61 and the difference in refractive index between said filler and cured product of said epoxy resin composition being in the range of ±0.05, as well as a process for producing said epoxy resin molded article with marbled pattern.

This invention further provides an epoxy resin molded article with marbled pattern obtained by cast-molding

a mixture comprising:

(I) an epoxy resin composition comprising:

(a) an epoxy resin,

(b) an acid anhydride as a curing agent, and

(c) a curing accelerator,

(II) a filler, and

(III) colored particles, as well as a process for producing said epoxy resin molded article with marbled pattern.

## BRIEF DESCRIPTION OF THE DRAWINGS

Figure 1 is a graph illustrating the relation between the total light transmittance and the plate thickness in this invention; and

Figure 2 is a schematic illustration of the cast-molding steps of this invention.

## DESCRIPTION OF THE PREFERRED EMBODIMENTS

According to this invention, an epoxy resin molded article having a total light transmittance of 25% or above as measured on a molded plate having a thickness of 5 mm and having excellent transparency or semi-transparency, moldability, low-contractability, smoothness, etc. can be obtained without forming a transparent resin surface layer such as gel coat.

If a colorant or an opaque additive for patterning is added to a mixture comprising a resin and a filler constituting the fundamental formulation of artificial marble, total light transmittance of the molded article usually decreases. Even in such a case, in the main material of this invention, i.e. in the mixture comprising (I) (a) an epoxy resin, (b) an acid anhydride as a curing agent, and (c) a curing accelerator, and (II) filler, a higher total light transmittance of cured product gives an artificial marble more excellent in transparency and superior feeling. In this sense, the total light transmittance of main material is an important factor to the artificial marble.

In this invention, as the epoxy resin (a), colorless or light-colored, transparent liquid or solid epoxy resins are preferably used among the known epoxy resins. The epoxy resin should be liquid at the time of casting.

Typical epoxy resins used in this invention include bisphenol type epoxy resins obtained from epichlorohydrin and dihydric phenols such as bisphenol A, bisphenol F and the like; cycloaliphatic epoxy resins; diglycidyl ester type epoxy resins obtained from polybasic acids such as hexahydrophthalic acid, tetrahydrophthalic acid, etc.; novolak type epoxy resins; long-chain polyol diglycidyl ether type epoxy resins; and the like. Examples of their commercial products include Epikote 828, 827, 815, 834, 1001 and 1004 manufactured by Shell Chemical Co., Ltd.; Araldite CY-183, CY-182 and CY-175 manufactured by Ciba-Geigy Corp.; DEN-431, DEN-432 and DER-732 manufactured by Dow Chemical Co., and the like. These epoxy resins can be used alone or as a mixture thereof and are made liquid at the time of casting so as to make the viscosity of the epoxy resin composition at room temperature 300 poises or less.

As the acid anhydride used as a curing agent (b), there can be used phthalic anhydride, tetrahydrophthalic anhydride, hexahydrophthalic anhydride, methyltetrahydrophthalic anhydride, methylhexahydrophthalic anhydride, 3,6-endomethylenetetrahydrophthalic anhydride, adipic anhydride, maleic anhydride, azelaic anhydride, trimellitic anhydride, pyromellitic anhydride, and the like. Among these curing agents, those which are sufficiently purified, only slightly colored, readily miscible with the epoxy resin, and low in melting point, sublimability and volatility are preferably used. The amount of curing agent to be compounded into the epoxy resin is preferably 0.5 to 1.5 equivalent weight and more, preferably 0.8 to 1.2 equivalent weight as expressed in terms of quantity of carboxyl group, per epoxy equivalent weight. If its amount is too small, curing reaction cannot progress sufficiently. If its amount is too large, mechanical properties of cured product are undesirably lowered. Particularly preferable range of the amount of curing agent is 0.85 to 1.0 equivalent weight. The use of the acid anhydride is important for obtaining a molded article with marbled pattern extremely low in coloring, and full of transparent feeling.

As the curing accelerator (c), well known ones such as tertiary amines and salts thereof, quaternary ammonium compounds, alkali metal alcoholates and diazabicycloalkenes can be used. Among them, those showing a smaller extent of color change upon cure and having a higher transparent feeling are more desirable. Typical examples of the curing accelerator include benzyldimethylamine, 2,4,6-tris(dimethylaminomethyl)-phenol, 2-ethyl-4-methylimidazole, their boron trifluoride salts, tris(dimethylaminomethyl)-phenol tris(2-ethylhexoate), triamylammonium phenolate, sodium hexanetriolate, 1,8-diazabicyclo(5,4,0)undecene-7, tin octanoate, triethanolamine borate, quaternary phosphonium salts such as compounds represented by the following general formula:

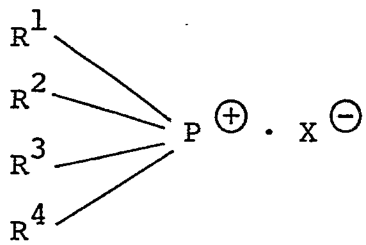

wherein X is a halogen; $R_1$, $R_2$, $R_3$ and $R_4$ are independently H, an alkyl group having 1-8 carbon atoms, a phenyl group, a benzyl group or an allyl group, and the like. The curing accelerator is added preferably in an amount of 0.2 to 5 parts by weight per 100 parts by weight of the epoxy resin. If its amount is too small, the epoxy resin cannot be cured readily. If its amount is too large, the improvement in curing-accelerating effect cannot be proportional to an increase in its amount, and mechanical properties are lowered in some cases. Accordingly, its preferable amount is 1 to 3 parts by weight, per 100 parts by weight of the epoxy resin.

Further, it is most preferable in the present invention to select and combine (a) an epoxy resin, (b) an acid anhydride as a curing agent and (c) a curing accelerator so that the cured product obtained therefrom has a refractive index of 1.53-1.61, from the viewpoint of giving transparency to the molded article and a deep feeling to the pattern.

As the filler, inorganic or organic fillers conventionally used as modifying agent or bulking filler of plastics can be used either in the form of a single material or as a mixture of two or more of them. That is, inorganic fillers such as kaolinite clay, silica, mica powder, glass powder, glass beads, powdered glass fiber, aluminium hydroxide, magnesium hydroxide and the like, or organic powders prepared by pulverizing polyvinyl chloride, nylon, polyethylene, polyester, cured epoxy resin and the like can be used. Among them, the use of silica, aluminium hydroxide or glass powder is particularly preferable. As the filler, those having such a refreactive index that its difference from that of the cured epoxy resin of this invention is in the range of $\pm 0.05$ should be selected. These fillers preferably have a particle diameter of 50 to 200 microns. Their amount is 30 to 250 parts by weight per 100 parts by weight of a mixture of an epoxy resin and an acid anhydride as a curing agent. A larger amount of filler is more desirable, unless the works of kneading and molding are affected by it.

If desired, assistants such as one or more colorants, antioxidants, coupling agents, ultraviolet absorbers, light stabilizers and the like may be added to the composition of this invention. These amount should be appropriately decided in accordance with the required appearance and performances.

Using the above-mentioned material, the epoxy resin molded article with marbled pattern of this invention can be produced by a process which comprises a step of preliminarily heating a mold, a step of treating upper and lower molds with a mold release agent, a step of deaerating a mixture comprising (I) an epoxy resin, an acid anhydride, a curing accelerator and (II) a filler, and then casting the mixture into a mold composed of upper and lower molds without applying mold release agent onto the inner surface of the molds, a step of heating the mold and curing the mixture to form a molded article, a step of releasing the molded article from the mold and a step of after-curing the molded article for the purpose of correction.

In order to give variety to the marbled pattern and improving hot water resistance of molded article, (III) colored particles (or a granular material) may be added additionally to the above-mentioned mixture comprising (I) an epoxy resin composition and (II) a filler.

As the colored particles (III), a granular material of uncured or cured thermosetting resin containing an inorganic filler can be used.

As the resin constituting the colored particles, a solid thermosetting resin of which softening point is higher than the curing temperature of the matrix epoxy resin composition (I) is preferably used. As said solid thermosetting resin, epoxy resin oligomers, unsaturated polyesters, acrylic resins and the like can be used.

For obtaining said colored granular material, the above-mentioned resin is mixed with an inorganic filler such as aluminum hydroxide, silica powder, glass powder or the like at such a ratio that the difference in specific gravity between the mixture comprising (I) an epoxy resin composition and (II) a filler ($\rho_{I+II}$) and the resulting colored particles ($\rho_{III}$) does not exceed a range of -0.2 to +0.5 [$-0.2 \leqq (\rho_{I+II}-\rho_{III}) \leqq 0.5$]. Further, if desired, one or more colorants such as pigments and the like for giving a desired color tone to the mixture, curing agnets, curing accelerators, various stabilizers and the like can be added thereto. The resulting mixture is then heated and melted for the sake of homogenization, after which it is cooled to obtain a thermosetting resin mixture, and it is pulverized. The mixture is preferably formed into a sheet for the sake of facilitating the pulverization. The pulverized filler-containing resin is classified by means of sieves, and fractions having a desired particle size are taken out and used as the colored particles or granular material.

For producing an epoxy resin molded article with marbled pattern, the colored granular material thus obtained is added to the mixture comprising an epoxy resin composition (I) and a filler (II) in a proportion enough to give the desired pattern, after which the resulting mixture is defoamed, cast and cured under conditions suitable for the resin.

The molded article with marbled pattern is subjected to finishing treatments such as cutting, grinding, etc. in accordance with need, and then put to use as various construction materials such as counter and the like.

When uncured colored particles are used in place of cured colored particles, interfacial adhesive force between the colored particles and the inorganic filler present in the matrix is improved. As a result, a molded

article with marbled pattern having an excellent hot water resistance and does not exhibit whitening phenomenon at the interface between colored granular material and matrix compound even after boiling test can be obtained. Thus the use of the uncured colored particles is more preferable.

Further, by using a solid thermosetting resin having a softening point higher than the curing temperature of the main matrix material as the resin constituting the colored particles, the dissolution of the colored particles into the matrix and thereby caused blotting and dimming of granular pattern in the molded article can be prevented.

Further, by mixing the inorganic filler to the thermosetting resin constituting the colored particles in such a proportion that the difference in a specific gravity between the colored granular material and the epoxy resin compound constituting the main material does not exceed a range of -0.2 to +0.5, the colored particles do not sink and approach the bottom nor float and approach the surface of the epoxy resin (main material) filled in the mold. Thus, the surface granular pattern in the molded article does not become uneven, and there can be obtained a transparent artificial marble having uniform granular pattern.

Hereunder, this invention will be explained by way of the following Examples, wherein parts and % are all by weight unless otherwise specified.

Examples 1-3

A mixture consisting of 100 parts of bisphenol A diglycidyl ether type epoxy resin (R-140, manufactured by Mitsui Petrochemical Industries, Ltd., epoxy equivalent 188), 95 parts of methylhexahydrophthalic anhydride (HN-5500, manufactured by Hitachi Chemical Co., Ltd., acid anhydride equivalent 168) as an acid anhydride type curing agent, 3 parts of tetrabutylphosphonium bromide (manufactured by Nippon Kagaku Kogyo K.K.) as a curing accelerator and 350 parts of silica (Crystallite AA, manufactured by Tatsumori K.K.) as a filler were thoroughly mixed together and deaerated in vacuum, after which the mixture was cast between two sheets of glass plate previously subjected to a mold release treatment (the gap was adjusted to 5 mm by the use of spacer). It was cured for one hour in an oven regulated to a temperature of 100±5° C. After releasing the glass plates, it was after-cured for 2 hours at 120° C to obtain a flat plate having a thickness of 5 mm. Its surface was very flat and smooth and it was so transparent that the letters of newspaper contacted with its backside could be clearly read out.

In further experiments, flat plates were prepared in the same manner as above, except that the silica used as filler was replaced by aluminum hydroxide (Hizilite H-320 manufactured by Nippon Light Metal Co., Ltd.) in one experiment (Example 2) and glass powder (M-10S, manufactured by Nippon Fellow K.K.) in another experiment (Example 3). The plates thus obtained were opaque as compared with the plate containing silica as filler. Total light transmittance, surface smoothness, hot water resistance and surface hardness (pencil hardness) of these three plates were measured in the following manner.

Thus total light transmittance determined by measuring the ratio of transmitting light intensity to incident light intensity by means of haze meter (model HGM-2K) and SM color computer (model SM-3) manufactured by Suga Shikenki K.K., and expressing it in term of percentage.

Surface smoothness was measured by means of Surface Analyzer manufactured by Budd Co. at a scanning distance of 8 inches, and the smoothness was expressed by an index (surface number, S.N.). A smaller value of S.N. means a better smoothness. The glass plate used in the molding had a S.N. of 12.

Hot water resistance was evaluated by dipping a 50 mm x 50 mm flat plate having a thickness of 5mm in a hot water having a temperature of 95±5° C for a continued 500 hours and then visually examining its appearance. Sealing treatment of the end of test piece was not carried out.

Surface hardness (pencil hardness) was measured accordance to JIS K-5400 wherein the resistance to scratching of the surface of molded article was evaluated by the pencil hardness giving scratching.

The results are summarized in Table 1.

Figure 1 illustrates the relation between thickness of molded article and total light transmittance. Since a part of incident light is lost as reflected light, the total light transmittance does not reach 100% even when thickness of plate approaches 0 mm, but extrapolation of the measured values to 0 mm thickness gives a value of about 80%. Accordingly, the plate thickness 5 mm, prescribed in this invention, is nothing other than a mere representative point of the curve. The claimed total light transmittance covers the lines (A) and (B) and the region contained by these lines shown in Figure 1.

Comparative Examples 1-3

In Table 1, performances of the molded plate obtained in Example 1 are compared with those of a commercially available polyester type artificial marble (Comparative Example 1) and commercially available acrylic artificial marbles (Comparative Examples 2 and 3).

The polyester type artificial marble was prepared by applying a mold release agent to a glass plate, forming a dam in its circumferential and central parts with rod-like foamed polyethylene having double-coated adhesive tape on its one side and having a thickness of 5 mm, and casting thereinto a paste prepared by mixing 100 parts by weight of an unsaturated polyester resin with 200 parts by weight of aluminum hydroxide together with a catalyst and then deaerating the mixture in vacuum. Before casting the paste, a mixture consisting of a gel coat resin and a curing agent was formed into a gel coat layer having a thickness of 0.3 mm by the well known spray-up process on one half area of the glass surface partitioned by the central dam. After curing the gel coat at 60° C for 30 minutes, the above-mentioned paste was cast and cured at 60° C for one minute. Then, it was

taken off from the glass plate and after-cured at 80° C for 2 hours. In the area having no gel coat layer thereon, the cured paste spontaneously separated from glass plate due to contraction and gloss spots were formed, so that it was not usable as artificial marble. The succeeding evaluations were not carried out on the last sample.

As the acryl type artificial marble, Korean R (manufactured by M.R.C. du Pont) and Kyowalite R400K (manufactured by Kyowa Gas Kagaku Kogyo K.K.) were used. Thus, their back surfaces were cut and ground until their thickness reached 5 mm, and then they were evaluated.

It is apparent from Table 1 that, as compared with the polyester type and acrylic type artificial marbles of comparative examples, the epoxy resin type artificial marble of this invention containing silica as a filler is particularly superior in total light transmittance and surface smoothness and, at the same time, it is much superior to the samples of comparative examples in hot water resistance and surface hardness.

Table 1

| Kind / Item of test | Example | | | Comparative Example | | |
|---|---|---|---|---|---|---|
| | 1 | 2 | 3 | 1 | 2 | 3 |
| | Filler: silica | Filler: aluminum hydroxide | Filler: glass powder | Polyester type artificial marble (with gel coat) | Acrylic artificial marble | |
| | | | | | ® Korean | ® Kyowalite |
| Total light transmittance 5 mm thickness (%) | 73 | 43 | 47 | 45 | 17 | 23 |
| Surface smoothness (surface number) | 23 | 25 | 34 | 158 | 35 | 23 |
| Hot water resistance | No change | No change | No change | Whitening in circumferential part | Whitening | - |
| Surface hardness (Pencil hardness) | 7H | 5H | 6H | 2H | 6H | 5H |

Example 4

(A) Liquid resin compound

One hundred parts of bisphenol A diglycidyl ether type epoxy resin (R-140 manufactured by Mitsui Petrochemical Industries, Ltd., epoxy equivalent 188), 95 parts of methylhexahydrophthalic anhydride (HN-5500, manufactured by Hitachi Chemical Co., Ltd., acid anhydride equivalent 168) as an acid anhydride type curing agent, 3 parts of tetrabutylphosphonium bromide (manufactured by Nippon Kagaku Kogyo K.K.) as a curing accelerator and 350 parts of silica (Crystalite AA, manufactured by Tatsumori K.K.) as a filler were thoroughly mixed together.

(B) Colored granular material

A composition consisting of 100 parts of bisphenol A diglycidyl ether type solid epoxy resin (R-309, manufactured by Mitsui Petrochemical Industries, Ltd., epoxy equivalent 3,000) having a softening point (135-150°C) higher than the curing temperature of the epoxy resin composition used in the liquid resin compound (A), 5 parts of imidazole (C11-Z, manufactured by Shikoku Kasei Co., Ltd.) as a curing agent, 200 parts of aluminum hydroxide as a filler of which difference in specific gravity from the epoxy resin used in the liquid resin compound (A) was in the range of -0.2 to +0.5, and 0.5-3 parts of carbon black as a pigment was melted and homogenized on hot roll at 100°C for 5 minutes. After cooling it, it was pulverized and classified by means of sieves to take out a fraction of uncured resin having a particle size of 0.15 to 0.60 mm.

Further, several kinds of colored granular materials different in color were prepared according to the same formulation as above, except that the pigment (carbon black) was replaced by, for example, titanium white, etc. The colored granular materials thus obtained were blended together according to desire to form various colored granular materials.

To 100 parts of the liquid resin compound (A) having the above-mentioned formulation, 20 parts of uncured colored granular material of desired color obtained above was added. The mixture was homogenized, defoamed, cast and heated at 100°C for one hour to cure the liquid resin compound (A). Subsequently, the colored granular material (B) was heat-cured at 120°C for 3 hours to obtain a granite-like artificial marble. This artificial marble had a beautiful appearance with uniform granite-like pattern. In a boiling test, no whitening of the colored granular material took place after boiling for 100 hours.

Comparative Example 4

A composition consisting of 100 parts of a bisphenol A diglycidyl ether type liquid epoxy resin having a softening point comparable to the curing temperature of the epoxy resin used in the liquid resin compound (A) (R-140, manufactured by Mitsui Petrochemical Industries, Ltd., epoxy equivalent 188), 85 parts of methylhexahydrophthalic anhydride (HN-5500, manufactured by Hitachi Chemical Co., Ltd.) as an acid anhydride type curing agent, 2 parts of imidazole (C11-Z, manufactured by Shikoku Kasei Co., Ltd.) as a curing accelerator, 200 parts of aluminum hydroxide of which different in specific gravility from the epoxy resin used in the liquid compound (A) was in the range of -0.2 to +0.5 as a filler, and 71 to 5 parts of carbon black as a pigment was homogenized and defoamed. Then, it was held between mold release-treated PET films, formed into a plate, and completely cured at 100°C for one hour. the cured product was pulverized and fractionated by means of sieves, and a fraction having a size of 0.15-0.60 mm was taken out to obtain a colored granular material.

Its 20 parts was mixed with the same liquid resin compound (A) as in Example 4, and the mixture was defoamed, cast and cured to obtain an artificial marble. The artificial marble thus obtained had a beautiful appearance with uniform granite-like pattern. However, in a boiling test, whitening appeared between the colored granular material and matrix after boiling for 100 hours.

As has been mentioned above, according to this invention, an epoxy resin molded article such as an artificial marble having excellent quality in total light transmittance, surface smoothness, hot water resistance and surface hardness can be obtained. Accordingly, an artificial marble using epoxy resin having a deep feeling and an excellent designability can be provided. Further, since it can be molded by casting, it can be produced easily, inexpensively, and in a short period of time.

More in detail, the surface of the molded article is very smooth and glossy, probably due to a very small shrinkage of the epoxy resin. In addition, the molded article according to this invention is weighty and high-grade compared with a mold article obtained from an epoxy resin alone. Further, the productivity is five times or more compared with that of artificial marbles made from gel coated polyester resin.

**Claims**

1. An epoxy resin molded article having a marbled pattern obtainable by casting a mixture comprising
(I) an epoxy resin composition comprising
(a) an epoxy resin
(b) an acid anhydride as a curing agent, and
(c) a curing accelerator, and

(II) a filler,
said epoxy resin composition having a refractive index of from 1.53 to 1.61 when cured, and said filler having a refractive index within ±0.05 of the refractive index of said cured epoxy resin composition.

2. An article according to claim 1, wherein the filler is at least one selected from silica powder, aluminium hydroxide powder and glass powder.

3. An article according to claim 1 or 2, which additionally comprises (III) colored particles.

4. An article according to claim 3, wherein the colored particles have been obtained by melt mixing a solid thermosetting resin, an inorganic filler and a colorant, and grinding the resulting mixture.

5. An article according to claim 4, wherein the solid thermosetting resin has a higher softening point temperature than the curing temperature of the epoxy resin composition (I).

6. An article according to any one of claims 3 to 5, wherein the colored particles (III) are mixed with the epoxy resin composition (I) and the filler (II) such that the difference in specific gravities between (I) + (II) and (III) is from -0.2 to +0.5.

7. A process for preparing an article as defined in any one of the preceding claims, which comprises casting a mixture comprising the epoxy resin composition (I), the filler (II) and, if desired, the colored particles (III).

8. A process according to claim 7, which comprises:
preliminary heating a mold comprising upper and lower portions;
treating both portions of the mold with a mold release agent;
casting the mixture defined in claim 7 in the mold after deaeration in a vacuum;
curing the mixture with heating to provide a molded article;
removing the molded article from the mold; and after-curing the molded article.

FIG. 1

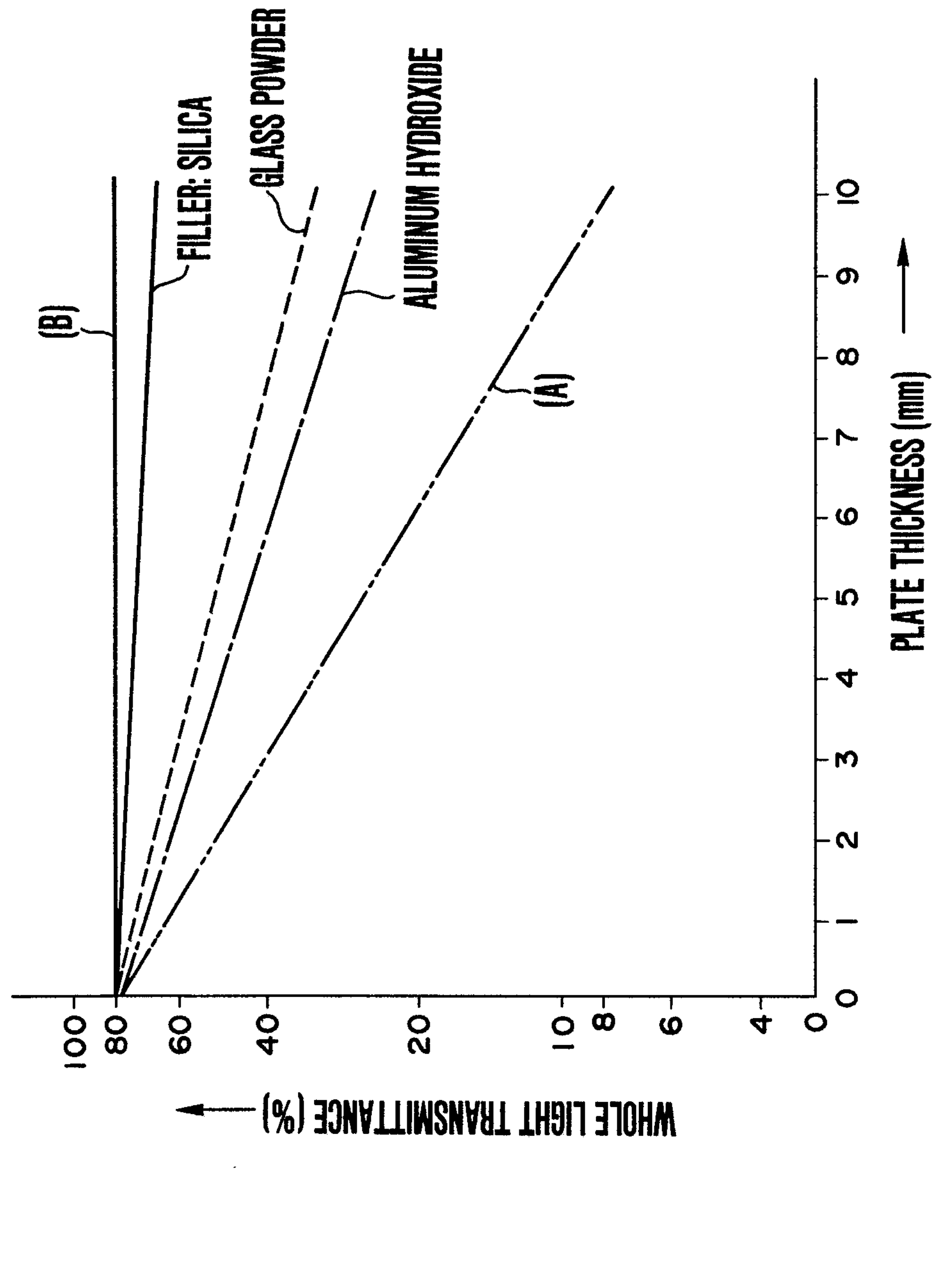
(B)
FILLER: SILICA
GLASS POWDER
ALUMINUM HYDROXIDE
(A)
WHOLE LIGHT TRANSMITTANCE (%)
100
80
60
40
20
10
8
6
4
0
1
2
3
4
5
6
7
8
9
10
PLATE THICKNESS (mm)

FIG.2

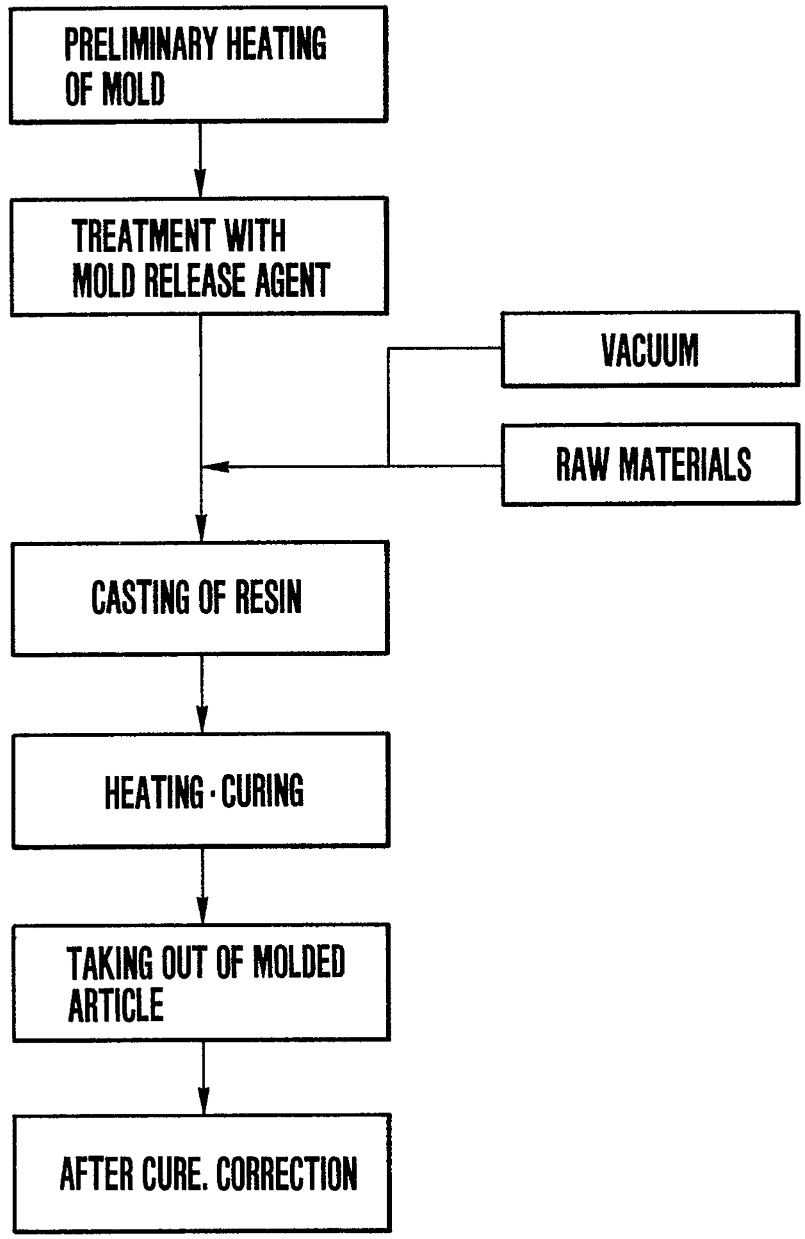
PRELIMINARY HEATING OF MOLD
TREATMENT WITH MOLD RELEASE AGENT
VACUUM
RAW MATERIALS
CASTING OF RESIN
HEATING · CURING
TAKING OUT OF MOLDED ARTICLE
AFTER CURE. CORRECTION